# EUROPEAN PATENT SPECIFICATION

(11) **EP 4 411 463 B1**
(45) Date of publication and mention of the grant of the patent: **11.02.2026**
(21) Application number: 22922342.5
(22) Date of filing: 24.11.2022
(51) Int. Cl.: G02F 1/1333, H04N 5/655, G06F 1/16

(54) **MOUNTING MEMBER AND DISPLAY DEVICE COMPRISING SAME**
MONTAGEELEMENT UND ANZEIGEVORRICHTUNG DAMIT
ÉLÉMENT DE MONTAGE ET DISPOSITIF D'AFFICHAGE LE COMPRENANT

(30) Priority: 20.01.2022 KR 20220008640
(43) Date of publication of application: 07.08.2024
(73) Proprietor: Samsung Electronics Co., Ltd., Suwon-si, Gyeonggi-do 16677 (KR)
(72) Inventor: OH, Kwanghyuk, Suwon-si Gyeonggi-do 16677 (KR); KIM, Kihen, Suwon-si Gyeonggi-do 16677 (KR); KIM, Seongsoo, Suwon-si Gyeonggi-do 16677 (KR); PARK, Dongkyu, Suwon-si Gyeonggi-do 16677 (KR)
(74) Representative: Appleyard Lees IP LLP
(86) International application number: PCT/KR2022/018669
(87) International publication number: WO 2023/140484

(56) References cited:
- EP-A1- 3 098 644
- KR-A- 20070 094 524
- KR-A- 20110 058 776
- KR-A- 20150 066 615
- KR-A- 20200 025 276
- KR-A- 20210 098 708

## Description

### [Technical Field]

The disclosure relates to a display device, and more particularly, to a mounting member for mounting a rear cover to a rear chassis and a display device including the same.

### [Background Art]

In general, a display device is a type of output device that visually displays data information, such as text, shapes, and images.

A display device includes a display panel on which visual information is displayed. A rear chassis is provided at the rear of the display panel to support the display panel. Typically, electrical components for performing various functions of the display device are arranged at the rear of the rear chassis, and a rear cover is arranged to cover the electrical components.

Such a rear cover may be directly coupled to the rear chassis, but in some cases, the rear cover and the rear chassis may be coupled by means of a separate frame chassis.

A frame chassis may be attached to the rear cover. If the frame chassis is deformed, it may cause deformation of the rear cover. The rear cover is a part of the display device that is visible from the outside, and thus deformation of the rear cover may affect the appearance of the display device. EP3098644A1 describes a display apparatus having an improved structure for implementing a slim product.

### [Disclosure]

### [Technical Problem]

The present disclosure is directed to a frame chassis capable of preventing deformation of a rear cover and a display device including the same.

### [Technical Solution]

The invention is directed to a display device as recited in appended independent claim 1. Other aspects of the invention are recited in the appended dependent claims.

### [Advantageous Effects]

According to the present disclosure, the frame chassis includes a first frame having a first free end and a second frame having a second free end spaced apart from the first free end, thereby preventing deformation of the rear cover.

### [Description of Drawings]

FIG. 1 is a perspective view illustrating a display device according to an embodiment of the present disclosure.
FIG. 2 is an exploded perspective view illustrating the display device of FIG. 1 disassembled.
FIG. 3 is a perspective view illustrating a rear chassis and a configuration behind the rear chassis of the display device of FIG. 1 disassembled.
FIG. 4 is an enlarged exploded view illustrating the coupling of the rear chassis and a frame chassis of the display device of FIG. 1.
FIG. 5 is a front view illustrating the frame chassis and the rear cover of FIG. 3 coupled.
FIG. 6 is a perspective view illustrating the frame chassis of FIG. 3.
FIG. 7 is a rear perspective view illustrating the frame chassis of FIG. 6 from the rear.
FIG. 8 is a cross-sectional view illustrating the frame chassis of FIG. 3 taken along the line AA'.
FIG. 9 is a rear view illustrating the rear chassis and a configuration behind the rear chassis except for the rear cover of the display device of FIG. 3 coupled.
FIG. 10 is a cross-sectional view illustrating configurations of FIG. 9 taken along the line BB'.
FIG. 11 is a perspective view of a frame chassis of a display device according to another embodiment of the present disclosure.
FIG. 12 is a perspective view of a frame chassis of a display device, according to another embodiment of the present disclosure.
FIG. 13 is a perspective view of a frame chassis of a display device, according to another embodiment of the present disclosure.
FIG. 14 is a perspective view of a frame chassis of a display device, according to another embodiment of the present disclosure.

### [Modes of the Invention]

Various embodiments of the present document and terms used therein are not intended to limit the technical features described in this document to specific embodiments, and should be understood to include various modifications, equivalents, or substitutes of the corresponding embodiments.

In addition, the same reference numerals or signs shown in the drawings of the disclosure indicate elements or components performing substantially the same function.

Also, the terms used herein are used to describe the embodiments and are not intended to limit and/or restrict the disclosure. In this disclosure, the terms "including", "having", and the like are used to specify features, figures, steps, operations, elements, components, or combinations thereof, but do not preclude the presence or addition of one or more of the features, figures, steps, operations, elements, components, or combinations thereof.

It will be understood that, although the terms "first", "second", "primary", "secondary", etc., may be used herein to describe various elements, but elements are not limited by these terms. These terms are only used to distinguish one element from another element. For example, without departing from the scope of the disclosure, a first element may be termed as a second element, and a second element may be termed as a first element. The term of "and/or" includes a plurality of combinations of relevant items or any one item among a plurality of relevant items.

As used herein, the terms "front", "rear", "upper", "lower", "left", "right", and the like are defined with reference to the drawings and are not intended to limit the shape and location of each component.

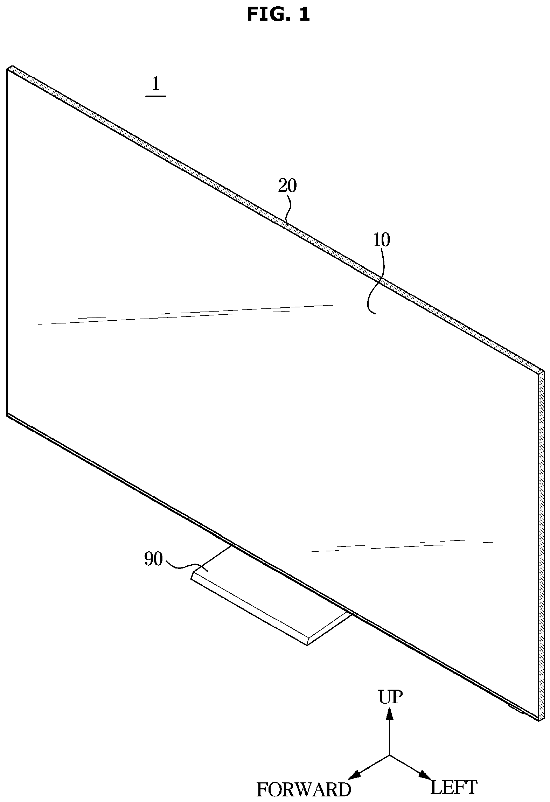

Specifically, as shown in FIG. 1, a direction in which a display panel 10 is facing is defined as front, and based on this definition, rear, left and right, and up and down are defined.

Hereinafter, various embodiments according to the disclosure will be described in detail with reference to the accompanying drawings.

FIG. 1 is a perspective view of a display device 1 according to an embodiment of the present disclosure.

The display device 1 may refer to a device that displays an images (e.g., a picture, video, and the like). The display device 1 may include a television, a monitor, a mobile device, and the like. In the following, a television will be described as an example of a display device. The television may include a flat television, a curved television, a bendable television, and the like, and the following description will focus on a flat television as an example of a television.

As shown in FIG. 1, the display device 1 includes the display panel 10 which displays an image facing forward. The display device 1 may include a power supply device (not shown) that supplies power to the display panel 10 and a main board (not shown) that controls the overall operation of the display panel 10.

The display panel 10 may include a self-emissive display element or a non-emissive display element.

The self-emissive display device may visually output an image by emitting light on its own without a separate light source 62. For example, a light emitting diode (LED), an organic light emitting diode (OLED), or a quantum dot-organic light emitting diode (QD-OLED), a micro LED made of an inorganic light emitting material, and the like may be a device capable of emitting light on its own based on a supplied current.

The non-emissive display device may include a non-emissive display device that requires a separate light source 62. For example, a liquid crystal display (LCD), which is a non-emissive display device, changes the arrangement of liquid crystals by an electric current, but requires the separate light source 62 to visually output an image through the changed arrangement of liquid crystals.

The display device 1 of the present disclosure may be applied to both the display panel 10 having a self-emissive display element and the display panel 10 having a non-emissive display element. However, for ease of description, the display panel 10 including the non-emissive display element will be assumed and described.

The display panel 10 may require a stand 90 for stable installation. In the description, it is assumed that the stand 90 includes a surface on a lower side of the display panel 10 that supports a load of the display panel 10 to prevent the display panel 10 from tipping over. However, the present disclosure is not limited thereto, and the stand 90 may include supporting the display panel 10 from a rear side of the display panel 10 by securing the display panel 10 to a wall.

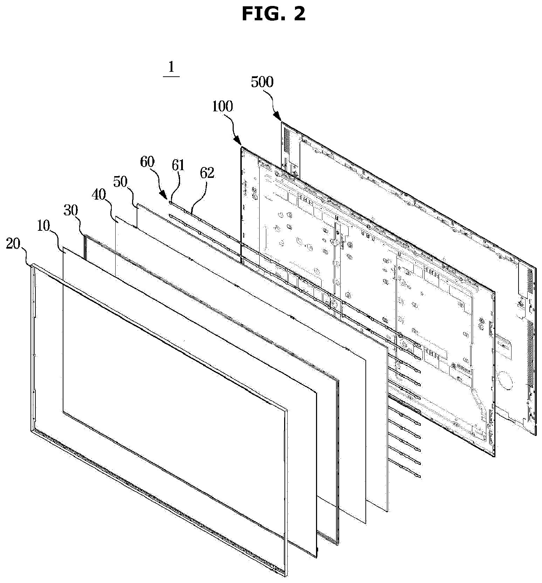

The stand 90 may be coupled to a rear chassis 100 (see FIG. 2) or a rear cover 500 (see FIG. 2) to support the display panel 10.

For ease of description, it is assumed that the stand 90 is provided in a single position corresponding to the center of the display panel 10. However, the present disclosure is not limited thereto, and the ideas implemented in the present disclosure may also be applied to the display device 1 in which the stands 90 are arranged symmetrically on the left and right with respect to the center of the display panel 10 or including a plurality of stands 90.

Hereinafter, it will be described what further configurations the display device 1 may include.

FIG. 2 is an exploded perspective view showing the display device 1 of FIG. 1 disassembled.

As shown in FIG. 2, the display device 1 may include a chassis assembly that receives and supports the display panel 10 and a backlight unit (BLU).

The display panel 10 may include a liquid crystal panel formed by encapsulating liquid crystal between two glass substrates 61, each provided with electrodes, and may display an image facing forward.

The display panel 10 may have a rectangular shape.

The chassis assembly includes a front chassis 20, a middle chassis 30, and the rear chassis 100.

The front chassis 20 extending along a border of the display panel 10 may be arranged to protect the up, down, left, and right directions of the display panel 10.

The front chassis 20 may include a bezel portion covering a front outer side of the display panel 10, and a side portion bent rearwardly from an end of the bezel portion to cover a side surface of the middle chassis 30.

The front chassis 20 may be coupled to a front side of the middle chassis 30 to be held in a state in which the display panel 10 is installed on the middle chassis 30.

The middle chassis 30 may be arranged with the display panel 10 and the front chassis 20 sequentially on the front side, and the rear chassis 100 on the rear side to support each configuration, as well as to maintain the display panel 10 and the rear chassis 100 spaced apart from each other.

The rear chassis 100 may be coupled within the middle chassis 30.

The rear chassis 100 may be formed in the shape of a high strength multifaceted plate and may include a metallic material (e.g., aluminum or aluminum alloy, etc.) that is less susceptible to thermal deformation due to heat generated by the heat of a light source module 60 and/or the display panel 10 received in the rear chassis 100.

The rear chassis 100 may include a material having high thermal conductivity. Accordingly, the heat generated by the light source module 60may be easily dissipated to improve the reliability of the display device 1.

The rear chassis 100 may be formed from a plastic material (e.g., polycarbonate (PC) material) or by adding glass fiber to a plastic material.

However, in contrast to the present embodiment, at least one of the front chassis 20 and the middle chassis 30 may be omitted or may formed integrally with each other.

The display device 1 may further include a housing enclosing the chassis assembly to protect and accommodate such chassis assembly, or the rear cover 500 covering a rear side of the rear chassis 100.

The display device 1 may include a frame chassis 200 coupled to a front side of the rear cover 500 to couple the rear cover 500 to the rear chassis 100. This will be described in detail later with reference to the associated drawings.

An electrical components 70 that enables the display device 1 to perform various functions may be disposed on an inner side of the rear cover 500. The electrical components 70 may be provided in a plurality. For the plurality of electrical components 70, each electrical components 70 may be connected by a cable 71 to enable the electrical components to interact with each other.

The display device 1 may further include the BLU arranged to supply light to the display panel 10.

The light source module 60 may include the light source 62 that emits light.

The BLU may be of a direct type in which the light source 62 is disposed directly below the display panel 10, as in the present embodiment. The BLU may include the light source module 60 comprising the light source 62 and the substrate 61 on which the light source 62 is mounted, and various optical sheets 40 disposed in a travel path of the light emitted from the light source module 60.

The light source 62 may be provided as an LED package accommodating LEDs that emit light. The light source module 60 may be arranged to supply light to the display panel 10. The light source module 60 may supply light to the display panel 10 from the rear side of the display panel 10. The light source module 60 may be disposed at the rear side of the display panel 10.

In contrast to a conventional LED, the light source 62 of the light source module 60 may be provided as a mini-LED, which is formed from LED chips having a size of 100 to 300 µm.

Alternatively, a cold cathode fluorescent lamp (CCFL) or an external electrode fluorescent lamp (EEFL) may be used as the light source 62 in the present embodiment.

A plurality of light sources 62 may be mounted on the substrate 61 at given intervals. The plurality of light sources 62 may all be formed in the same configuration, and the single light source 62 of the plurality of light sources 62 will be described below.

Printed circuit wiring for transmitting driving power and signals to the light source 62 may be formed on the substrate 61.

In contrast to the edge-type display device 1, the light emitted from the light source module 60 may directly supply light to the display panel 10. In this case, to improve the characteristics of the light emitted from the light source module 60, the optical sheet 40 may be disposed between the light source module 60 and the display panel 10.

The optical sheet 40 may include a prism sheet and a protection sheet.

The prism sheet may include a prism pattern in the shape of a triangular prism, wherein the prism pattern may be arranged in a plurality of adjacent ones to form a plurality of strips. Such prism patterns may be formed by protruding toward the display panel 10 in rows in a repeating pattern of peaks and troughs. Light diffused from the light source module 60 may be refracted while passing through the prism patterns, and thus light may be incident on the display panel 10 in a vertical direction.

The protection sheet may be designed to protect various components from external impact or entry of foreign substances, and in particular, the prism sheet may be susceptible to scratches, and thus the protection sheet may prevent the prism sheet from being scratched.

The display device 1 may include a light conversion member 50 arranged to change the wavelength of the light emitted from the light source module 60.

The light conversion member 50 may be disposed between the display panel 10 and the light source module 60. As the light emitted from the light source module 60 passes through the light conversion member 50, the wavelength of the transmitted light may be changed and the changed light may be introduced into the display panel 10.

The light source module 60 may emit light in the blue color range. In this case, the light in the blue color range may be partially biased toward green. The blue-colored light generated by the light source module 60 may be converted to white light by the light conversion member 50.

The light conversion member 50 may include a quantum dot (QD).

The light conversion member 50 may convert the color of the incident light emitted from the light source module 60 and emit light of different colors. For example, the light conversion member 50 may convert the incident blue-colored light emitted from the light source module 60 into red light and green light (or yellow light) by different QDs, and then emit the converted light to the outside. In particular, the light conversion member 50 may emit light of a different color from the incident light by changing the wavelength of the incident light (wavelength shift).

The QDs may emit light of a specific wavelength by emitting themselves or by absorbing light when a voltage is applied.

The electrons in the QDs are located in a low energy level (or band) in a stable state. When the QDs absorb light from the outside, the electrons in the low energy level move to a high energy level (or band). Since the electrons in the high energy levels are in an unstable state, the electrons may naturally move from the high energy level to the low energy level. Accordingly, during the transition from the high energy level to the low energy level, the electrons may emit light equal to the energy difference between the high energy level and the low energy level.

The wavelength of the emitted light may be determined by the energy difference between the high energy level and the low energy level.

In particular, the smaller the QD, the shorter the wavelength of light it may emit, and the larger the QD, the longer the wavelength of light it may emit. For example, a QD with a diameter of 2 nanometers [nm] may emit blue-colored light, while a QD with a diameter of about 10 nanometers [nm] may emit red-colored light.

Furthermore, by using the QDs of different sizes, the QDs may be made to emit different wavelengths of light, from red-colored light to blue-colored light. In other words, by using of different sizes of the QDs, it is possible to generate light with natural colors.

The light conversion member 50 may be manufactured by dispersing the QDs described above in a resin. When light is incident on the light conversion member 50 from the light source module 60, the incident light may excite the electrons of the QDs included in the light conversion member 50. In other words, the electrons in the low energy level (or band) may be moved to the high energy level (or band) by the incident light.

Then, as the excited electrons move from the high energy level to the low energy level, the QDs may emit light of different wavelengths depending on their size. The light of different wavelengths may then pass through the display panel 10 to generate an image. Accordingly, when blue-colored light emitted from the light source module 60 is incident on the light conversion member 50, light in the green color range and light in the red color range may be emitted by the green-colored light QDs and the red-colored light QDs.

Finally, white-colored light, which is a mixture of light having three different wavelengths, may be incident on the display panel 10 by the blue-colored light emitted from the light source module 60 and the green-colored light and the red-colored light emitted from the light conversion member 50.

Hereinafter, the rear chassis 100 and a configuration behind the rear chassis 100 will be described in more detail.

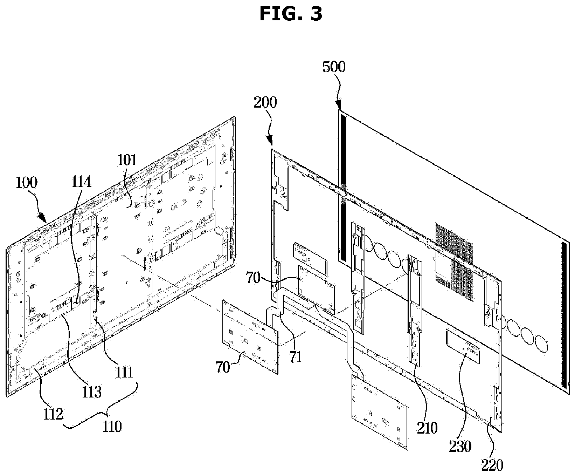

FIG. 3 is an exploded perspective view showing the rear chassis 100 and a configuration behind the rear chassis of the display device of FIG. 1.

As shown in FIG. 3, the electrical components 70 may be arranged on the rear side of the rear chassis 100. The rear cover 500 is arranged on the rear side of the electrical components 70 to cover the electrical components 70. To couple the rear cover 500 to the rear chassis 100, the frame chassis 200 may be arranged on a front side of the rear cover 500.

The display device 1 may have a thin thickness in order to provide high aesthetics to a user. The thinner the display device 1 is, the more beautiful the display device 1 may be perceived by the user.

To this end, the thickness of the rear cover 500 of the display device 1 may be reduced.

The rear cover 500 may have a shape corresponding to the rear chassis 100 and cover the entire rear of the rear chassis 100. At the rear side of the rear chassis 100, the plurality of electrical components 70 may be arranged throughout the rear side of the rear chassis 100. Accordingly, since the rear cover 500 covers the rear side of the rear chassis 100 as a whole, any electrical components 70 that may be sporadically located at the rear side of the rear chassis 100 may be covered by the rear cover 500.

The rear cover 500 may include a plastic material to lighten the weight of the display device 1. If the rear cover 500 is made of a plastic material, machining costs and material costs may be reduced.

Typically, the rear cover 500 may be produced by a plastic injection process.

When the thickness of the rear cover 500 is 1 mm or less, it may be difficult to produce the rear cover by an injection process for process reasons. In this case, the rear cover 500 may be produced by a rolling press method.

The rear cover 500 produced by such a method may have a constant thickness. In other words, the rear cover 500 may have a plate shape.

The rear cover 500 is coupled to the rear chassis 100. The rear cover 500 may be attached to the rear chassis 100 by an adhesive.

In particular, the rear cover 500 is detachably coupled to the rear chassis 100 to allow easy repair of the electrical components 70 located between the rear chassis 100 and the rear cover 500. When the rear cover 500 is attached to the rear chassis 100 by an adhesive, it is preferable to use an adhesive that detachably attaches the rear chassis 100 and the rear cover 500.

In the event that the rear chassis 100 and the rear cover 500 are not attached by an adhesive, the frame chassis 200 may be provided to detachably couple the rear cover 500 to the rear chassis 100.

The frame chassis 200 may be attached to the rear cover 500 on one side and detachably arranged to the rear chassis 100 on the other side. The frame chassis 200 may be manufactured by injection molding so that the frame chassis 200 may have a certain shape in order to be detachably coupled to the rear chassis 100.

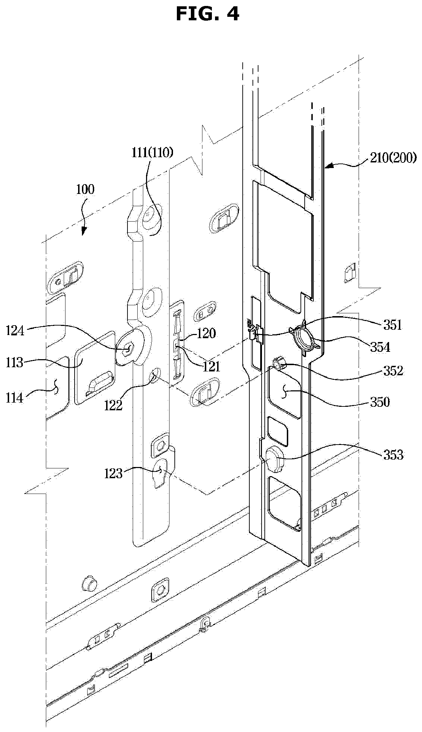

A configuration for the frame chassis 200 to be detachably coupled to the rear chassis 100 will be described in more detail with reference to FIG. 4.

The rear chassis 100 supports the display panel 10. The rear chassis 100 may be formed in the shape of a rectangular thin plate. The rear chassis 100 includes a rear chassis body 101. To increase the strength of the rear chassis 100, the rear chassis body 101 of the rear chassis 100 includes reinforcing ribs 110 protruding rearwardly.

The reinforcing ribs 110 include frame ribs 111 located at the center of the rear chassis 100 and extending in the vertical direction. The reinforcing ribs 110 may include edge ribs 112 extending along an edge of the rear chassis 100. The reinforcing ribs 110 may include side ribs 113 between the frame rib 111 and the edge rib 112.

The side ribs 113 may be provided in a plurality. A seating space 114 may be provided between the plurality of side ribs 113, the seating space 114 being recessed toward the front. In the seating space 114, the cable 71 connecting the electrical components 70 may be seated thereon. This is because the cable 71 seated on the side ribs 113 may cause the thickness of the display device 1 to increase.

The frame chassis 200 may include a center frame chassis 210 located corresponding to a center of the rear cover 500. The center frame chassis 210 may be located at a position corresponding to the reinforcing ribs 110. Accordingly, the center frame chassis 210 may be formed to correspond to the frame ribs 111.

In other words, the center frame chassis 210 may be detachably coupled to the frame ribs 111.

The frame chassis 200 may include an edge frame chassis 220 attached to an edge of the rear cover 500. The edge frame chassis 220 may be detachably coupled to the front chassis 20 (see FIG. 2).

The edge frame chassis 220 may be positioned corresponding to the rear side of the rear chassis 100, where the reinforcing ribs 110 are not formed, to prevent the thickness of the display device 1 from increasing. The edge ribs 112 may be formed to be spaced inwardly from an outline of the edge of the rear chassis 100. In this case, the edge frame chassis 220 may be formed at a position corresponding to the rear chassis body 101 formed on an outer side of the edge ribs 112.

The plurality of electrical components 70 may be disposed between the rear chassis 100 and the rear cover 500. The cables 71 may be provided to connect each of the electrical components 70. The cables 71 may be located between the frame chassis 200 and the rear chassis 100.

In summary, the plurality of electrical components 70 and the cables 71 connecting the plurality of electrical components 70 may be located at the rear side of the rear chassis 100. The rear cover 500 may be located on the rear side of the plurality of electrical components 70 and the cable 71 connecting the plurality of electrical components 70. The rear cover 500 may have a shape of a plate, so that in order for the rear cover 500 to be coupled to the rear side of the rear chassis 100, the frame chassis 200 couplable to the front side of the rear cover 500 may be provided. The frame chassis 200 may allow the rear cover 500 to be detachably coupled to the rear chassis 100.

Hereinafter, a manner in which the frame chassis 200 is detachably coupled to the rear chassis 100 will be described.

FIG. 4 is an enlarged exploded view showing the coupling of the rear chassis 100 and the frame chassis 200 of the display device 1 of FIG. 1.

As shown in FIG. 4, the frame chassis 200 may be detachably coupled to the rear chassis 100.

Of the frame chassis 200, the center frame chassis 210 is shown in FIG. 4. For ease of description, the following description will focus on coupling the center frame chassis 210 to the rear chassis 100, but is not limited thereto. Such a coupling method may also apply to coupling a side frame chassis 230 or the edge frame chassis 220 to the rear chassis 100.

The rear chassis 100 may include a wire 120. The frame chassis 200 may include a wire hook 351 at a position corresponding to the wire 120. The frame chassis 200 may be coupled to the rear chassis 100 by the wire hook 351 being hooked to the wire 120. In addition, by appropriately adjusting the shape of the wire hook 351, the wire hook 351 may be released from the wire 120 when the user applies an appropriate force. Accordingly, the frame chassis 200 may be releasably coupled to the rear chassis 100.

In addition, a wire coupling hole 121 may be formed on a rear side of the wire 120 to allow the wire hook 351 to be more easily coupled to the wire 120.

The wire hook 351 may be coupled to the wire 120 only when the wire hook 351 contacts the wire 120 at a precise position. A member may be needed to guide the position of the frame chassis 200 so that the wire hook 351 is positioned at the target position.

To this end, the frame chassis 200 may include a guide boss 352 protruding toward the rear chassis 100. The rear chassis 100 may include a boss hole 122 at a position corresponding to the guide boss 352. The guide boss 352 may be inserted into the boss hole 122. As a result, the position of the frame chassis 200 may be guided.

The guide boss 352 may have a hollow cylindrical shape. This may reduce the manufacturing cost of the guide boss 352.

The frame chassis 200 may include a guide protrusion 353 protruding toward the rear chassis 100. The rear chassis 100 may include a protrusion hole 123 at a position corresponding to the guide protrusion 353. The guide protrusion 353 may be inserted into the protrusion hole 123. As a result, the position of the frame chassis 200 may be guided.

The guide protrusion 353 may have a solid cylindrical shape. The guide protrusion 353 may have a cross-section that is not radially symmetrical. Accordingly, when the frame chassis 200 is coupled to the rear chassis 100, rotational movement of the frame chassis 200 may be prevented.

In the case where the frame chassis 200 includes both the guide boss 352 and the guide protrusion 353, the position of the frame chassis 200 may be guided to a desired position and direction.

The rear chassis 100 may be provided with a wall mounting hole 124 for mounting the display device 1 to a wall. A fastener, such as a screw, may be fastened to the wall mounting hole 124. A mounting guide 354 protruding toward the rear chassis 100 may be provided at a position corresponding to the wall mounting hole 124 to prevent deformation of the frame chassis 200.

The frame chassis 200 may be attached to the rear cover 500 by an adhesive 600. Accordingly, in the case where the frame chassis 200 is detachably coupled to the rear chassis 100 in the manner described above, the rear cover 500 may also be detachably coupled to the rear chassis 100.

However, in the event that the rear cover 500 and the frame chassis 200 are coupled by the adhesive 600, the rear cover 500 may be subject to deformation.

Further description thereof will follow.

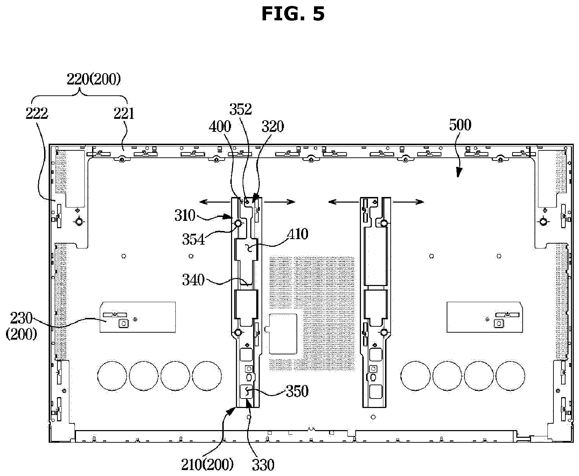

FIG. 5 is a front view showing the frame chassis 200 and the rear cover 500 of FIG. 3 coupled together.

As shown in FIG. 5, the frame chassis 200 may be coupled to the rear cover 500 by the adhesive 600.

In this case, the adhesive 600 may be an adhesive in the form of an applicator or double-sided tape. The adhesive 600 may be anything that attaches the frame chassis 200 and the rear cover 500.

The frame chassis 200 may include the center frame chassis 210 attached to the center of the rear cover 500. The center frame chassis 210 may be arranged to be elongated in the vertical direction. The center frame chassis 210 may include a pair of center frame chassis 210 arranged side by side on the left and right so that the rear cover 500 may be stably coupled to the rear chassis 100.

The frame chassis 200 may include the edge frame chassis 220 attached to the rear cover 500 corresponding to the edge of the rear cover 500. The rear cover 500 may have a rectangular shape with an elongated width. The edge frame chassis 220 may include a long side frame chassis 221 corresponding to a relatively long transverse side of the rear cover 500. The edge frame chassis 220 may include a short side frame chassis 222 corresponding to a relatively short longitudinal side of the rear cover 500. The long side frame chassis 221 may be provided one on each of up and down, and the short side frame chassis 222 may be provided one on each of left and right. As a result, the edge frame chassis 220 may be arranged to correspond to the edge of the rear cover 500.

The side frame chassis 230 may be disposed between the center frame chassis 210 and the edge frame chassis 220. The shape of the side frame chassis 230 is shown to be a rectangular shape in the present disclosure, but may also be formed in an L-shaped. The side frame chassis 230 may assist in coupling the rear cover 500 to the rear chassis 100 between the edge frame chassis 220 and the center frame chassis 210, which may help to more securely couple the rear cover 500 to the rear chassis 100. The center frame chassis 210 may be arranged to extend in the vertical direction, so that the side frame chassis 230 may be positioned between the center frame chassis 210 and the short side frame chassis 222. As the center frame chassis 210 may be formed in pairs, a pair of side frame chassis 230 may be positioned between each of the center frame chassis 210 and the edge frame chassis 220.

The frame chassis 200 may include a through space 410 or a through hole 350 formed by penetrating in a front-to-back direction. The through space 410 or through hole 350 may be formed for the cables 71 or the electrical components 70 to be located in a corresponding region. Alternatively, the through space 410 or the through hole 350 may be formed to use less material to reduce the unit cost of the frame chassis 200. The arrangement of the cables 71 corresponding to the through space 410 will be described below with reference to the associated drawings.

In the event that the adhesive 600 is used in the process of coupling the frame chassis 200 to the rear cover 500, the adhesive 600 may harden in the process of coupling the frame chassis 200 and the rear cover 500. The hardened adhesive 600 may be subject to shrinkage, which may cause deformation of the frame chassis 200 to which the adhesive 600 is attached. Furthermore, deformation of the frame chassis 200 may cause deformation of the rear cover 500 to which the frame chassis 200 is attached by the adhesive 600.

In this case, since the through space 410 or the through hole 350 may be formed in the frame chassis 200, deformation may occur around the through space 410 or the through hole 350. When the frame chassis 200 is deformed in the front-to-back direction, the deformation of the frame chassis 200 may cause the rear side of the rear cover 500 to protrude. This may reduce the aesthetics of the display device 1.

To avoid such a situation, the through space 410 of the frame chassis 200 may be formed to extend toward an end of the frame chassis 200.

The frame chassis 200 includes a first frame 310 extending in a first direction to be attached to the rear cover 500 and including a first free end 311 in the first direction, and a second frame 320 extending in a second direction to be attached to the rear cover 500 and including a second free end 321 in the second direction, corresponding to the first frame 310. To prevent deformation of the rear cover 500, the second free end 321 of the second frame 320 may be separated and spaced apart from the first free end 311.

Here, the first free end 311 and the second free end 321 may refer to relatively movable ends of the first frame 310 and the second frame 320. However, this is not necessarily limited to referring to the ends that are not coupled to any configuration and thus have a degree of freedom.

In other words, the first free end 311 and the second free end 321 may be referred to as corresponding configurations.

Furthermore, the first direction and the second direction may be different directions, but may also be the same direction. Preferably, the first direction and the second direction may refer to the same direction. The first direction and the second direction may both point upward.

Accordingly, the first frame 310 and the second frame 320 may include a shape extending in the vertical direction.

Additionally, the first frame 310 and the second frame 320 may have a shape having the same length.

However, since the wire hook 351 and/or the guide boss 352 may be formed on the first frame 310, the first frame 310 may have a different shape from the second frame 320.

Therefore, a deformation opening 400 is formed between the first free end 311 and the second free end 321, and the through space 410 may be formed between the first frame 310 and the second frame 320, wherein the through space 410 may extend to the deformation opening 400.

The first frame 310 and the second frame 320 may be arranged in a third direction different from the first and second directions, and the frame chassis 200 may further include a third frame 330 extending in a third direction so as to connect the first frame 310 and the second frame 320.

In the case where the first frame 310 and the second frame 320 are formed separately, the rear cover 500 may not be deformed even without considering deformation in the front-to-back direction. However, when a large number of parts are assembled, the assembly time may be long and the cost may increase as the number of processes increases. Conversely, when manufacturing as a single part, the manufacturing may be completed in a single injection process, and thus speeding up the manufacturing time. Accordingly, it is desirable from a manufacturing point of view to connect the first frame 310 and the second frame 320 by the third frame 330.

In other words, the first frame 310, the second frame 320, and the third frame 330 may be formed to surround at least a portion of the through space 410.

In the case where the frame chassis 200 and the rear cover 500 are coupled by the adhesive 600 and deformation of the frame chassis 200 occurs as the adhesive 600 hardens, the deformation may occur in a left-to-right direction because the first frame 310 and the second frame 310 are separated and spaced apart from each other. Since deformation in the front-to-back direction may be a relatively difficult deformation as it requires deformation of the rear cover 500, the frame chassis 200 may be induced to deform in the left-to-right direction. Accordingly, deformation of the rear chassis 100 may be prevented despite deformation of the frame chassis 200.

In this case, such a feature of the frame chassis 200 may preferably be formed on the center frame chassis 210. For the edge frame chassis 220, the edge frame chassis 220 may be coupled to the front chassis 20 disposed on the edge of the rear chassis 100, so that deformation of the edge frame chassis 220 in the front-to-back direction may be relatively limited. For the side frame chassis 230, the side frame chassis 230 is close to the edge frame chassis 220, so that deformation in the front-to-back direction is relatively difficult to occur. In addition, the side frame chassis 230 does not have a size that allows for much deformation. In particular, when the center frame chassis 210 is coupled to the rear chassis 100, the electrical components 70 may be placed in a corresponding portion. In other words, the center frame chassis 210 may include the through space 410 or the through hole 350, making it relatively easy to deform. Meanwhile, the side frame chassis 230 may not include such through space, making it relatively difficult to be deformed.

Accordingly, the above configurations may be applicable to the frame chassis 200 in general, but may be a necessary configuration for the center frame chassis 210 in particular. In view of this, the present embodiment will be described assuming that the above idea applies only to the center frame chassis 210.

However, as seen above, the frame chassis 200 may have a possibility of being deformed in the front-to-back direction, so it is not necessarily applicable only to the center frame chassis 210, but also to the edge frame chassis 220 and the side frame chassis 230.

The center frame chassis 210 will be described in more detail below.

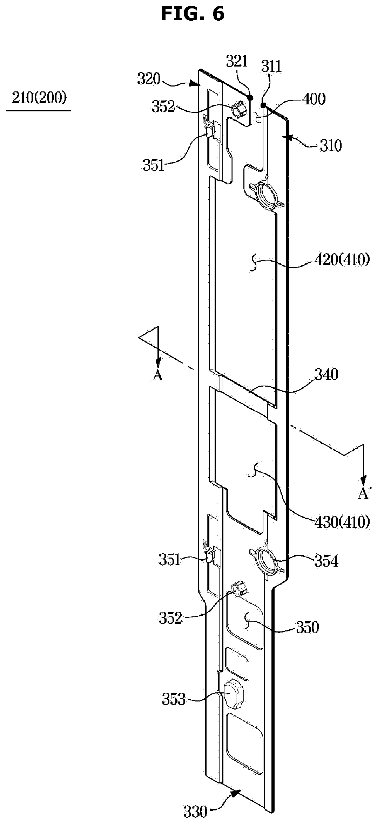

FIG. 6 is a perspective view showing the frame chassis 200 of FIG. 3.

As shown in FIG. 6, the center frame chassis 210 may include the first frame 310 extending in the vertical direction and the second frame 320 extending in the vertical direction. The first frame 310 and the second frame 320 may be arranged in the left-to right direction. The first frame 310 and the second frame 320 may be connected by the third frame 330 extending in the left-to-right direction.

To stably position the first frame 310 and the second frame 320, a connecting frame 340 may be provided to connect the first frame 310 and the second frame 320. The connecting frame 340 may be positioned across the through space 410.

The through space 410 may be divided by the connecting frame 340. A space surrounded by the connecting frame 340, the first frame 310, the second frame 320, and the third frame 330 may be referred to as a closed through space 430. A space surrounded by the connecting frame 340, the first frame 310, and the second frame 320 may be referred to as an open through space 420. In other words, the through space 410 may include the open through space 420 and the closed through space 430.

The guide boss 352 and the guide protrusion 353 mentioned above may be disposed on the third frame 330. In addition, the third frame 330 may include the through hole 350 formed by penetrating the third frame 330 so as to reduce the weight of the frame chassis 200. In addition, the mounting guide 354 may be provided on the third frame 330.

The third frame 330 may not be provided with a separate free end. This is because the third frame 330 is formed on a lower side, where the stand 90 (see FIG. 1) may be provided. The stand 90 may be coupled to the rear chassis 100 or the rear cover 500, and in such a process, the third frame 330 may be pressed in the front-to-back direction. Accordingly, the third frame 330 may be prevented from being deformed in the front-to-back direction.

In other words, the display device 1 may include the stand 90 that may be coupled to the rear cover 500 or the rear chassis 100, and the third frame 330 may be positioned adjacent to a location where the stand 90 is coupled.

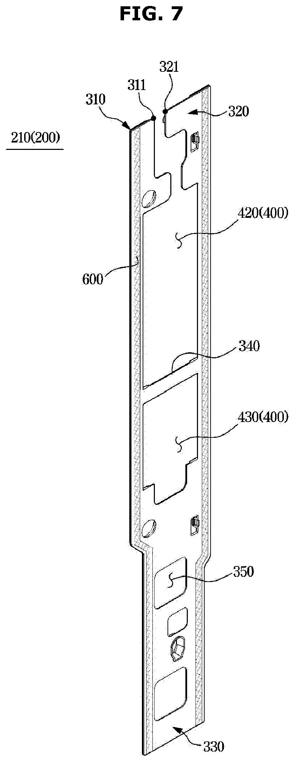

FIG. 7 is a rear perspective view of the frame chassis 200 of FIG. 3 from the rear.

As shown in FIG. 7, the adhesive 600 may be applied to the rear sides of the first frame 310 and the second frame 320. However, the adhesive 600 may not be applied to the rear side of the third frame 330.

In other words, the first frame 310 and the second frame 320 may be coupled to the rear cover 500 by the adhesive 600, and the third frame 330 may not have the adhesive 600 between the third frame 330 and the rear cover 500. That is, the third frame 330 may not be coupled to the rear cover 500. This may allow the frame chassis 200 to be coupled to the rear cover 500 although less adhesive 600 is used.

However, such an adhesive method may not prevent the third frame 330 from moving in the front-to-back direction, making it even more necessary to prevent the movement in the front-to-back direction as described above.

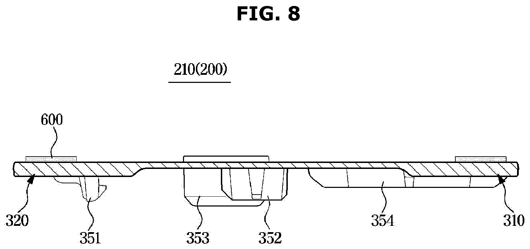

FIG. 8 is a cross-sectional view showing the frame chassis 200 of FIG. 6 cut along the line AA'.

As shown in FIG. 8, the frame chassis 200, in particular the center frame chassis 210, may include the wire hook 351, the guide protrusion 353, and the like in order to be detachably coupled to the rear cover 500.

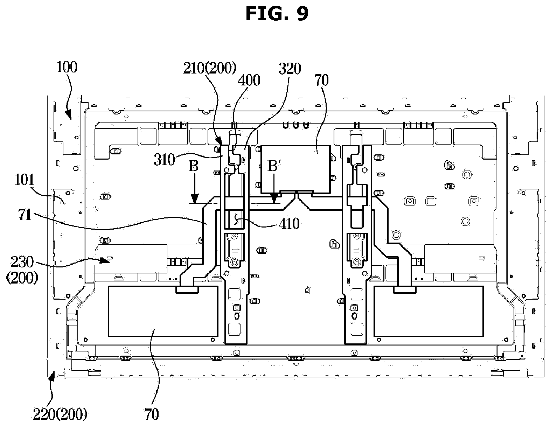

FIG. 9 is a rear view showing the rear chassis 100 and a configuration behind the rear chassis excluding the rear cover 500 of the display device of FIG. 3 coupled.

As shown in FIG. 9, the plurality of electrical components 70 and the cables 71 connecting each of the electrical components 70 may be disposed on the rear side of the rear chassis 100.

The plurality of electrical components 70 may be disposed at the center of an upper side on the left and right sides of a lower side, respectively. The description will be given as an example of the cable 71 connecting the electrical components 70 disposed at the center of the upper side to the electrical components 70 disposed at the left side of the lower side.

The cable 71 may extend from the electrical components 70 disposed at the upper center, through between the center frame chassis 210 and the rear chassis 100, and along the rear side of the frame rib 111, and extend back through between the center frame chassis 210 and the rear chassis 100.

The extended cable 71 may extend through the seating space 114 provided between the side ribs 113 and toward the electrical components 70 disposed on the lower left side. The seating space 114 may provide a space for the cable 71 to pass through without passing over the side rib 113, thereby protecting the cable 71.

More specifically, the cable 71 is shown passing through the through space 410. In other words, it can be seen that the through space 410 includes a first through gap 313 provided for the cable 71 to pass between the first frame 310 and the frame rib 111, and a second through gap 323 provided for the cable 71 to pass between the second frame 320 and the frame rib 111.

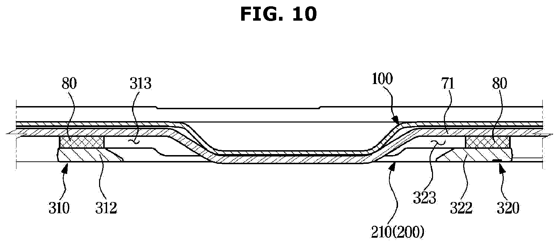

FIG. 10 is a cross-sectional view showing the configurations of FIG. 9 taken along the line BB'.

As shown in FIG. 10, the cable 71 may be disposed at the rear side of the frame rib 111 formed on the rear chassis 100. The center frame chassis 210 may be provided at the rear side of the cable 71. The rear cover 500 may be provided at the rear side of the center frame chassis 210.

The cable 71 may extend along a rear surface of the frame rib 111. When the cable 71 is disposed along the rear surface of the frame rib 111, the cable 71 may be disposed through a through gap between the frame rib 111 and the center frame chassis 210.

The first frame 310 may include a first frame support portion 312 formed to correspond to an outer side of the frame rib 111 when the frame chassis 200 is coupled to the rear chassis 100 and protruding toward the rear chassis 100. The second frame 320 may include a second frame support portion 322 formed to correspond to the first frame support portion 312.

In other words, the first frame 310 may include the first frame support portion 312 on a first side spaced apart from the through space 410, which has a greater thickness in the front-to-back direction than a second side adjacent to the through space 410. In other words, the first frame 310 may have a shape whose outer side is thicker than its inner side. This may be also the case for the second frame 320.

As mentioned above, the center frame chassis 210 may be provided with the through space 410 or the through hole 350 in consideration of the electrical components 70 being provided where they are coupled, or as a matter of reducing material costs. Accordingly, a structure such as the wire hook 351, which is coupled to the rear chassis 100, may be formed on an outer side of the center frame chassis 210 or on an outer side of the first frame 310 and the second frame 320. By strongly coupling the rear chassis 100 and the rear cover 500 at the outer sides, the possibility of separation of the rear chassis 100 and the rear cover 500 may be reduced. To this end, the outer side of the center frame chassis 210, i.e., the outer sides of the first frame 310 and the second frame 320 may be provided with the frame support portion having a thick thickness.

Furthermore, the display device 1 may output audio, and thus may include a speaker (not shown) for outputting audio. When a speaker emits sound, vibration is generated. To reduce transmission of such a vibration, a shock absorbing member 80 including a material, such as a nonwoven fabric, may be included between the frame chassis 200 and the rear chassis 100. The frame support portions 312 and 322 may be positioned on a rear side of the shock absorbing member 80.

The degree of protrusion of the frame support portions 312 and 322 may be determined by considering the thickness of the shock absorbing member 80 to allow the rear cover 500 to be positioned flat.

In the above, an embodiment of the display device 1 is described in which the through space 410 is formed up to one end of the frame chassis 200 to prevent deformation of the rear cover 500.

Such a frame chassis 200 may be regarded as a type of mounting member. Accordingly, as described above, it is not necessarily to be regarded as a configuration that may be applied only to the display device 1. Given that it is not a configuration that is used only for the display device 1, the ideas represented by the present disclosure may be described as follows.

The mounting member 200 of the present disclosure may be a mounting member that couples a first panel and a second panel positioned facing the first panel, and may include a frame chassis 200 bonded to the first panel by the adhesive 600 and detachably coupled to the second panel to couple the first panel and the second panel. The frame chassis 200 may include the through space 410 formed in a direction facing the first panel, and the through space 410 may extend to an end of the frame chassis 200.

Hereinafter, another embodiment of the display device 1 will be described as an example in which the spirit of the present disclosure is implemented. In the following description, the same configurations as those of the display device 1 above are assigned the same reference numerals, and detailed descriptions may be omitted.

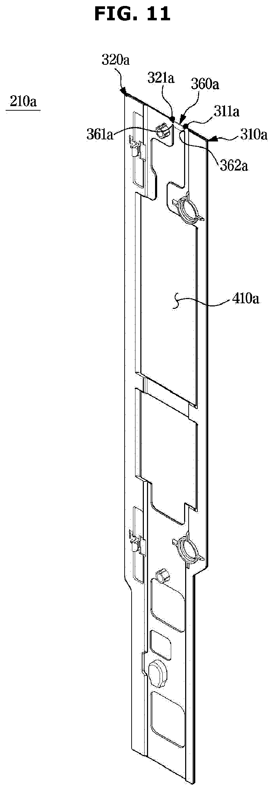

FIG. 11 is a perspective view of a frame chassis 200a of a display device 1a according to another embodiment of the present disclosure.

As shown in FIG. 11, a supporter 360a connecting a first free end 311a of the first frame 310a and a second free end 321a of the second frame 320a may be provided between the first free end 311a and the second free end 321a.

If, as in the embodiment mentioned above, a deformation opening 400a is provided between the first free end 311a and the second free end 321a, it may be difficult to attach the frame chassis 200a to the rear cover 500 because the first free end 311a and the second free end 321a are not secured. In this case, the supporter 360a connecting the first free end 311a and the second free end 321a may be formed to restrict the movement of the first free end 311a and the second free end 321a, so that it may be easy to attach the frame chassis 200a to the rear cover 500.

Since the supporter 360a may be removed from the frame chassis 200a after the frame chassis 200a is attached to the rear cover 500, it is preferable to provide the supporter 360a to be easily removable. After the supporter 360a is separated, a first supporter trace portion 361a may be formed at a point where the supporter 360a meets the first free end 311a and a second supporter trace portion 362a may be formed at a point where the supporter 360a meets the second free end 321a.

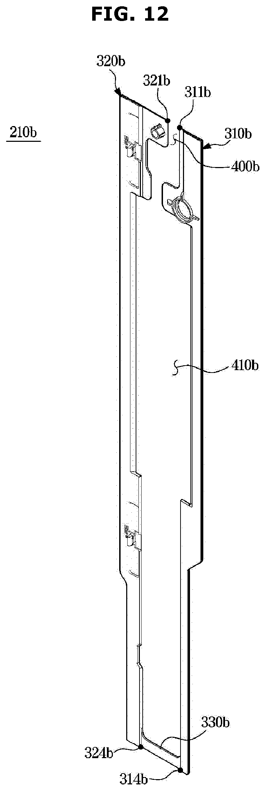

FIG. 12 is a perspective view of a frame chassis 200b of a display device 1b according to another embodiment of the present disclosure.

As shown in FIG. 12, a first frame 310b may include a third free end 314b on the opposite side of which a first free end 311b is formed. A second frame 320b may include a fourth free end 324b on the opposite side of which a second free end 321b is formed.

In this case, a third frame 330b may be formed by connecting the third free end 314b and the fourth free end 324b.

The third frame 330b may not include a separate through hole. Accordingly, the first frame 310b and the second frame 320b may be less deformed in the front-to-back direction than in previous embodiments.

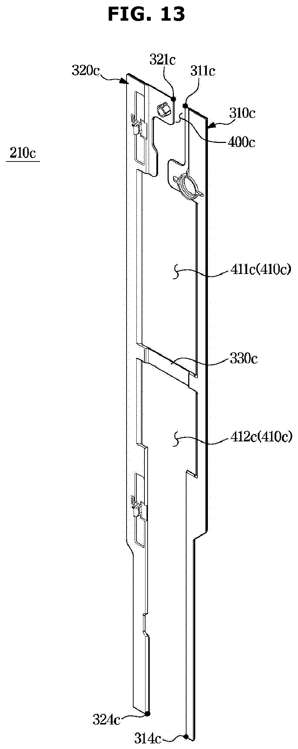

FIG. 13 is a perspective view of a frame chassis 200c of a display device 1c according to another embodiment of the present disclosure.

As shown in FIG. 13, a first frame 310c may include a third free end 314c on the opposite side of which a first free end 311c is formed. A second frame 320c may include a fourth free end 324c on the opposite side of which a second free end 321c is formed.

In this case, a third frame 330c may be formed by connecting the first frame 310c and the second frame 320c. The third frame 330c may be formed across a space between the first frame 310c and the second frame 320c.

Of the space surrounded by the first frame 310c, the second frame 320c, and the third frame 330c, the space on the upper side may be referred to as a first through space 411c, and the space on the lower side may be referred to as a second through space 412c.

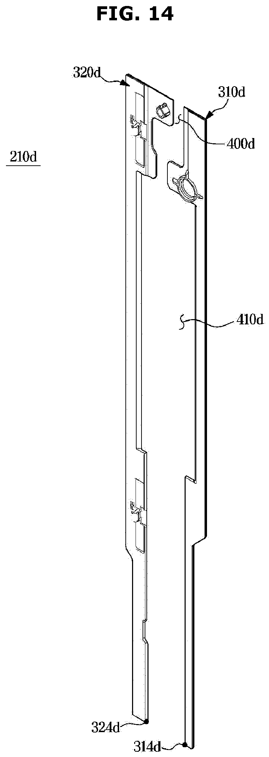

FIG. 14 is a perspective view of a frame chassis 200d of a display device 1d according to another embodiment of the present disclosure.

As shown in FIG. 14, the frame chassis 200d may include a first frame 310d and a second frame 320d separated and spaced apart from the first frame 310d.

Because the first frame 310d and the second frame 320d are spaced apart, the frame chassis 200d may be prevented from being deformed in the front-to-back direction.

## Claims

1. A display device (1) comprising:
a display panel (10);
a rear chassis (100) disposed on a rear side of the display panel (10) to support the display panel (10);
a rear cover (500) disposed on a rear side of the rear chassis (100) to cover the rear chassis (100), the rear cover (500) having a plate shape; and
a frame chassis positioned between the rear chassis (100) and the rear cover (500) and coupled to the rear cover (500) to enable the rear chassis (100) and the rear cover (500) to be detachably coupled;
wherein the frame chassis (200) includes:
a first frame (310) extending in a first direction to be attached to the rear cover (500), and including a first free end (311) in the first direction, and
a second frame (320), corresponding to the first frame (310), extending in a second direction to be attached to the rear cover (500), and including a second free end (321) in the second direction, and
wherein the second free end (321) of the second frame (320) is separated and spaced apart from the first end to prevent deformation of the rear cover (500), wherein
a deformation opening (400) is formed between the first free end (311) and the second free end (321),
a through space (410) is formed between the first frame (310) and the second frame (320), and
the through space (410) is formed to extend to the deformation opening (400), and wherein the display device further includes a cable (71) located on the rear side of the rear chassis (100),wherein the rear chassis (100) includes:
a rear chassis body (101); and
a reinforcing rib protruding rearwardly from the rear chassis body (101) to increase the strength of the rear chassis (100), and including a frame rib (111) formed at a position corresponding to the frame chassis (200) when the frame chassis (200) is coupled to the rear chassis (100); and
wherein the through space (410) includes:
a first through gap (313) disposed between the first frame (310) and the frame rib (111) to allow the cable (71) to pass through; and
a second through gap (323) disposed between the second frame (320) and the frame rib (111) to allow the cable (71) to pass through.

2. The display device of claim 1, wherein
the first frame (310) and the second frame (320) are arranged in a third direction different from the first direction and the second direction, and
the frame chassis (200) further includes a third frame (330) extending in the third direction to connect the first frame (310) and the second frame (320).

3. The display device of claim 2, wherein
the first frame (310) and the second frame (320) are coupled to the rear cover (500) by an adhesive (600), and
no adhesive is placed between the third frame (330) and the rear cover (500).

4. The display device of claim 2, further including a stand couplable to the rear cover (500) or the rear chassis (100), and
the third frame is located adjacent to a position to which the stand is coupled.

5. The display device of claim 2, wherein
the first frame (310) and the second frame (320) extend in a vertical direction, and
the third frame (330) extends in a left-to-right direction.

6. The display device of claim 1, wherein the rear cover (500) has a plate shape with a thickness of 1 mm or less.

7. The display device of claim 6, wherein the rear cover (500) is manufactured by a rolling press method.

8. The display device of claim 7, wherein the frame chassis (200) is manufactured by an injection molding method.

9. The display device of claim 1, wherein the frame chassis (200) is located at a position corresponding to a center of the rear cover (500).

10. The display device of claim 1, wherein
the frame chassis (200) is a center frame chassis (200), and
the display device (1) further includes:
a front chassis (20) extending along an edge of the rear chassis (100);
a side frame chassis (230) positioned between the center frame chassis (210) and the edge of the rear chassis(100), and capable of detachably coupling the rear chassis (100) and the rear cover (500); and
an edge frame chassis (100) detachably coupled to the front chassis (20) and positioned correspondingly to the rear side of the rear chassis (100), on which the reinforcing rib is not formed, to prevent the display device (1) from increasing in thickness.

11. The display device of claim 1, wherein
the first frame (310) includes a first frame support portion (312) formed to correspond to an outer side of the frame rib (111) and protruding toward the rear chassis (100) when the frame chassis is coupled to the rear chassis (100), and
the second frame (320) includes a second frame support portion (322) formed to correspond to the first frame support portion (312).

12. The display device of claim 1, wherein a supporter is detachably arranged between the first frame (310) and the second frame (320) to facilitate a coupling of the frame chassis (200) to the rear cover (500).

13. The display device of claim 2, wherein a through hole (350) is formed by passing through the third frame (330) to reduce a weight of the frame chassis (200).

## Patentansprüche

1. Anzeigevorrichtung (1), umfassend:
ein Anzeigefeld (10);
ein hinteres Chassis (100), das an einer Rückseite des Anzeigefelds (10) angeordnet ist, um das Anzeigefeld (10) zu tragen;
eine hintere Abdeckung (500), die an einer Rückseite des hinteren Chassis (100) angeordnet ist, um das hintere Chassis (100) abzudecken, wobei die hintere Abdeckung (500) eine Plattenform aufweist; und
ein Rahmenchassis, das zwischen dem hinteren Chassis (100) und der hinteren Abdeckung (500) positioniert und an die hintere Abdeckung (500) gekoppelt ist, um zu ermöglichen, dass das hintere Chassis (100) und die hintere Abdeckung (500) lösbar gekoppelt werden;
wobei das Rahmenchassis (200) Folgendes beinhaltet:
einen ersten Rahmen (310), der sich in einer ersten Richtung erstreckt, um an der hinteren Abdeckung (500) befestigt zu werden, und ein erstes freies Ende (311) in der ersten Richtung beinhaltet, und
einen zweiten Rahmen (320), der dem ersten Rahmen (310) entspricht und sich in einer zweiten Richtung erstreckt, um an der hinteren Abdeckung (500) befestigt zu werden, und ein zweites freies Ende (321) in der zweiten Richtung beinhaltet, und
wobei das zweite freie Ende (321) des zweiten Rahmens (320) von dem ersten Ende getrennt und beabstandet ist, um eine Verformung der hinteren Abdeckung (500) zu verhindern, wobei
eine Verformungsöffnung (400) zwischen dem ersten freien Ende (311) und dem zweiten freien Ende (321) ausgebildet ist,
ein Durchgangsraum (410) zwischen dem ersten Rahmen (310) und dem zweiten Rahmen (320) ausgebildet ist und
der Durchgangsraum (410) ausgebildet ist, um sich zu der Verformungsöffnung (400) zu erstrecken, und wobei die Anzeigevorrichtung ferner ein Kabel (71) beinhaltet, das sich auf der Rückseite des hinteren Chassis (100) befindet, wobei das hintere Chassis (100) Folgendes beinhaltet:
einen hinteren Chassiskörper (101); und
eine Verstärkungsrippe, die von dem hinteren Chassiskörper (101) nach hinten vorsteht, um die Festigkeit des hinteren Chassis (100) zu erhöhen, und eine Rahmenrippe (111) beinhaltet, die an einer Position ausgebildet ist, die dem Rahmenchassis (200) entspricht, wenn das Rahmenchassis (200) an das hintere Chassis (100) gekoppelt ist; und
wobei der Durchgangsraum (410) Folgendes beinhaltet:
einen ersten Durchgangsspalt (313), der zwischen dem ersten Rahmen (310) und der Rahmenrippe (111) angeordnet ist, um zu ermöglichen, dass das Kabel (71) hindurchgeht; und
einen zweiten Durchgangsspalt (323), der zwischen dem zweiten Rahmen (320) und der Rahmenrippe (111) angeordnet ist, um zu ermöglichen, dass das Kabel (71) hindurchgeht.

2. Anzeigevorrichtung nach Anspruch 1, wobei
der erste Rahmen (310) und der zweite Rahmen (320) in einer dritten Richtung eingerichtet sind, die sich von der ersten Richtung und der zweiten Richtung unterscheidet, und
das Rahmenchassis (200) ferner einen dritten Rahmen (330) beinhaltet, der sich in der dritten Richtung erstreckt, um den ersten Rahmen (310) und den zweiten Rahmen (320) zu verbinden.

3. Anzeigevorrichtung nach Anspruch 2, wobei der erste Rahmen (310) und der zweite Rahmen (320) durch einen Klebstoff (600) an die hintere Abdeckung (500) gekoppelt sind und
kein Klebstoff zwischen dem dritten Rahmen (330) und der hinteren Abdeckung (500) platziert ist.

4. Anzeigevorrichtung nach Anspruch 2, ferner beinhaltend einen Ständer, der an die hintere Abdeckung (500) oder das hintere Chassis (100) koppelbar ist, und wobei sich der dritte Rahmen neben einer Position befindet, an die der Ständer gekoppelt ist.

5. Anzeigevorrichtung nach Anspruch 2, wobei sich der erste Rahmen (310) und der zweite Rahmen (320) in einer vertikalen Richtung erstrecken und
sich der dritte Rahmen (330) in einer Richtung von links nach rechts erstreckt.

6. Anzeigevorrichtung nach Anspruch 1, wobei die hintere Abdeckung (500) eine Plattenform mit einer Dicke von 1 mm oder weniger aufweist.

7. Anzeigevorrichtung nach Anspruch 6, wobei die hintere Abdeckung (500) durch ein Walzpressverfahren hergestellt ist.

8. Anzeigevorrichtung nach Anspruch 7, wobei das Rahmenchassis (200) durch ein Spritzgussverfahren hergestellt ist.

9. Anzeigevorrichtung nach Anspruch 1, wobei sich das Rahmenchassis (200) an einer Position befindet, die einer Mitte der hinteren Abdeckung (500) entspricht.

10. Anzeigevorrichtung nach Anspruch 1, wobei das Rahmenchassis (200) ein Mittelrahmenchassis (200) ist, und
die Anzeigevorrichtung (1) ferner Folgendes beinhaltet:
ein vorderes Chassis (20), das sich entlang einem Rand des hinteren Chassis (100) erstreckt;
ein Seitenrahmenchassis (230), das zwischen dem Mittelrahmenchassis (210) und dem Rand des hinteren Chassis (100) positioniert ist und in der Lage ist, das hintere Chassis (100) und die hintere Abdeckung (500) lösbar zu koppeln; und
ein Randrahmenchassis (100), das lösbar an das vordere Chassis (20) gekoppelt und entsprechend der Rückseite des hinteren Chassis (100) positioniert ist, auf der die Verstärkungsrippe nicht ausgebildet ist, um zu verhindern, dass die Anzeigevorrichtung (1) an Dicke zunimmt.

11. Anzeigevorrichtung nach Anspruch 1, wobei der erste Rahmen (310) einen ersten Rahmentragabschnitt (312) beinhaltet, der ausgebildet ist, um einer Außenseite der Rahmenrippe (111) zu entsprechen, und in Richtung des hinteren Chassis (100) vorsteht, wenn das Rahmenchassis an das hintere Chassis (100) gekoppelt ist, und
der zweite Rahmen (320) einen zweiten Rahmentragabschnitt (322) beinhaltet, der ausgebildet ist, um dem ersten Rahmentragabschnitt (312) zu entsprechen.

12. Anzeigevorrichtung nach Anspruch 1, wobei ein Träger lösbar zwischen dem ersten Rahmen (310) und dem zweiten Rahmen (320) eingerichtet ist, um ein Koppeln des Rahmenchassis (200) an die hintere Abdeckung (500) zu erleichtern.

13. Anzeigevorrichtung nach Anspruch 2, wobei ein Durchgangsloch (350) ausgebildet ist, indem es durch den dritten Rahmen (330) verläuft, um ein Gewicht des Rahmenchassis (200) zu reduzieren.

## Revendications

1. Dispositif d'affichage (1) comprenant :
un panneau d'affichage (10) ;
un châssis arrière (100) disposé sur un côté arrière du panneau d'affichage (10) pour supporter le panneau d'affichage (10) ;
un couvercle arrière (500) disposé sur un côté arrière du châssis arrière (100) pour recouvrir le châssis arrière (100), le couvercle arrière (500) possédant une forme de plaque ; et
un châssis de cadre positionné entre le châssis arrière (100) et le couvercle arrière (500) et couplé au couvercle arrière (500) pour permettre au châssis arrière (100) et au couvercle arrière (500) d'être couplés de manière détachable ;
ledit châssis (200) de cadre comprenant :
un premier cadre (310) s'étendant dans une première direction pour être fixé au couvercle arrière (500), et comprenant une première extrémité libre (311) dans la première direction, et
un deuxième cadre (320), correspondant au premier cadre (310), s'étendant dans une deuxième direction pour être fixé au couvercle arrière (500), et comprenant une seconde extrémité libre (321) dans la deuxième direction, et
ladite seconde extrémité libre (321) du deuxième cadre (320) étant séparée et espacée de la première extrémité pour empêcher la déformation du couvercle arrière (500), une ouverture de déformation (400) étant formée entre la première extrémité libre (311) et la seconde extrémité libre (321),
un espace traversant (410) étant formé entre le premier cadre (310) et le deuxième cadre (320), et
ledit espace traversant (410) étant formé pour s'étendre jusqu'à l'ouverture de déformation (400), et ledit dispositif d'affichage comprenant en outre un câble (71) situé sur le côté arrière du châssis arrière (100), ledit châssis arrière (100) comprenant :
un corps (101) de châssis arrière ; et
une nervure de renforcement faisant saillie vers l'arrière à partir du corps (101) de châssis arrière pour accroître la résistance du châssis arrière (100), et comprenant une nervure (111) de cadre formée au niveau d'une position correspondant au châssis (200) de cadre lorsque le châssis (200) de cadre est couplé au châssis arrière (100) ; et
ledit espace traversant (410) comprenant :
un premier espace traversant (313) disposé entre le premier cadre (310) et la nervure (111) de cadre pour permettre au câble (71) de passer à travers ; et
un second espace traversant (323) disposé entre le deuxième cadre (320) et la nervure (111) de cadre pour permettre au câble (71) de passer à travers.

2. Dispositif d'affichage de la revendication 1,
ledit premier cadre (310) et ledit deuxième cadre (320) étant agencés dans une troisième direction différente de la première direction et de la deuxième direction, et
ledit châssis (200) de cadre comprenant en outre un troisième cadre (330) s'étendant dans la troisième direction pour raccorder le premier cadre (310) et le deuxième cadre (320).

3. Dispositif d'affichage de la revendication 2, ledit premier cadre (310) et ledit deuxième cadre (320) étant couplés au couvercle arrière (500) par un adhésif (600), et
aucun adhésif n'étant placé entre le troisième cadre (330) et le couvercle arrière (500).

4. Dispositif d'affichage de la revendication 2, comprenant en outre un pied pouvant être couplé au couvercle arrière (500) ou au châssis arrière (100), et ledit troisième cadre étant situé adjacent à une position au niveau de laquelle le pied est couplé.

5. Dispositif d'affichage de la revendication 2, ledit premier cadre (310) et ledit deuxième cadre (320) s'étendant dans une direction verticale, et
ledit troisième cadre (330) s'étendant dans une direction de gauche à droite.

6. Dispositif d'affichage de la revendication 1, ledit couvercle arrière (500) présentant une forme de plaque possédant une épaisseur inférieure ou égale à 1 mm.

7. Dispositif d'affichage de la revendication 6, ledit couvercle arrière (500) étant fabriqué par un procédé de presse à rouleaux.

8. Dispositif d'affichage de la revendication 7, ledit châssis (200) de cadre étant fabriqué par un procédé de moulage par injection.

9. Dispositif d'affichage de la revendication 1, ledit châssis (200) de cadre étant situé au niveau d'une position correspondant à un centre du couvercle arrière (500).

10. Dispositif d'affichage de la revendication 1, ledit châssis (200) de cadre étant un châssis central (200) de cadre, et
ledit dispositif d'affichage (1) comprenant en outre :
un châssis avant (20) s'étendant le long d'un bord du châssis arrière (100) ;
un châssis latéral (230) de cadre positionné entre le châssis central (210) de cadre et le bord du châssis arrière (100), et capable de coupler de manière amovible le châssis arrière (100) et le couvercle arrière (500) ; et
un châssis (100) de cadre de bord couplé de manière amovible au châssis avant (20) et positionné de manière correspondante sur le côté arrière du châssis arrière (100), sur lequel la nervure de renforcement n'est pas formée, pour empêcher le dispositif d'affichage (1) d'augmenter en épaisseur.

11. Dispositif d'affichage de la revendication 1, ledit premier cadre (310) comprenant une première partie de support (312) de cadre formée pour correspondre à un côté externe de la nervure (111) de cadre et faisant saillie vers le châssis arrière (100) lorsque le châssis de cadre est couplé au châssis arrière (100), et
ledit deuxième cadre (320) comprenant une seconde partie de support (322) de cadre formée pour correspondre à la première partie de support (312) de cadre.

12. Dispositif d'affichage de la revendication 1, un élément de support étant agencé de manière détachable entre le premier cadre (310) et le deuxième cadre (320) pour faciliter un couplage du châssis (200) de cadre au couvercle arrière (500).

13. Dispositif d'affichage de la revendication 2, un trou traversant (350) étant formé en passant à travers le troisième cadre (330) pour réduire un poids du châssis (200) de cadre.
